# EUROPEAN PATENT APPLICATION

(11) **EP 1 662 592 A1**
(43) Date of publication of application: **31.05.2006**
(21) Application number: 04747576.9
(22) Date of filing: 15.07.2004
(51) Int. Cl.: H01M 4/66, H01M 4/58, H01G 9/016

(54) **CURRENT COLLECTING STRUCTURE AND ELECTRODE STRUCTURE**

(30) Priority: 15.07.2003 JP 2003274990; 20.08.2003 JP 2003296689; 13.07.2004 JP 2004206268
(71) Applicant: ITOCHU CORPORATION, Chuo-ku, Osaka-shi, Osaka 541-8577 (JP); Ener1 Battery Company, Fort Louderdal 33309 (US)
(72) Inventor: SHIMIZU, Tatsuo;, o-ku Tokyo;1070061 (JP); HASHIMOTO, Zenzou;, o-ku Tokyo;1070061 (JP); SHEMBEL, Elena,, Fort Lauderdale, Florida 33309 (US); NOVAK, Peter,, Fort Lauderdale, Florida 33309 (US); KALYNUSHKIN, Yegven, Fort Lauderdale, Florida 33309 (US); FLURY, Chris,, Fort Lauderdale Florida;33309 (US)
(74) Representative: HOFFMANN EITLE
(86) International application number: PCT/JP2004/010110
(87) International publication number: WO 2005/006469

(57) **Abstract**

An object of this invention is to achieve the current collecting structure and the electrode structure with good electrical conductivity and ionic conductivity which are comprised of the current collecting substrate and the current collecting structure or the electrode structure that are covered with the carbon material or the electrode active material formed on the current collecting substrate without the use of binders.

## Description

### TECHNICAL FIELD

This invention relates to a current collecting structure and an electrode structure of electrical components, such as batteries and capacitors.

### TECHNICAL BACKGROUND

Conventionally, current collecting structures and electrode structures of electrical components such as batteries and capacitors do not have strong electrical conductivity, ionic conductivity, and durability because of adhesive binders used in current collecting substrates, conducting aids, and electrode active materials.

### DISCLOSURE OF THE INVENTION

An object of this invention is to achieve a current collecting structure and an electrode structure with good electrical conductivity and ionic conductivity. Another object of this invention is to achieve a current collecting structure and electrode structure with good durability. Another object of the invention is to offer batteries and capacitors with good performance.

The invention is characterized by the current collecting structure comprising a current collecting substrate and a carbon material formed on the current collecting structure without the use of binders. Furthermore, the invention is characterized by the current collecting structure comprising the current collecting substrate and rod-shaped, sponge shaped, or fiber-shaped carbon materials formed on the current collecting substrate. Still further, the invention is characterized by an electrode structure comprising either one of the above-mentioned current collecting substrates and the electrode active material formed on the surface of the carbon material formed. Still further, the invention is characterized by the electrode structure comprising the current collecting substrate and an electrode active material formed on the current collecting substrate without the use of binders. Yet further, the invention has the current collecting substrate and the rod-shaped, sponge shaped, or fiber-shaped electrode active material formed on the current collecting substrate.

### BRIEF DESCRIPTION OF THE DRAWINGS

The above and other objects of the present invention will become readily apparent by reference to the following detailed description when considered in conjunction with the accompanying drawings wherein:

FIG. 1 is a view illustrating the electrode active material structure where the electrode material is formed on the current collecting substrate:

FIG. 2 is a view illustrating the electrode active material structure in sponge and fiber shapes where the electrode active material is formed on the current collecting substrate;

FIG. 3 is a model view of the electrode structure where granular graphite is formed on the electrode active material;

FIG. 4 is a view of the electrode structure where fiber-shaped graphite is formed on the electrode active material formed on the current collecting substrate;

FIG. 5 is a model view of the electrode structure where graphite is formed around the current collecting substrate and the electrode active material is further formed therearound;

FIG. 6 is a model view of the deposition device.

FIG. 7 is a view of the solid electrolyte deposition temperature characteristics.

FIG. 8 is a chart explaining the thermodynamics of vapor.

FIG. 9 is a view of the current collecting structure with the graphite layer formed thereon;

FIG. 10 is a view of the current collecting structure with rod-shaped graphite formed thereon;

FIG. 11 is a view of the current collecting structure with sponge-shaped graphite formed thereon;

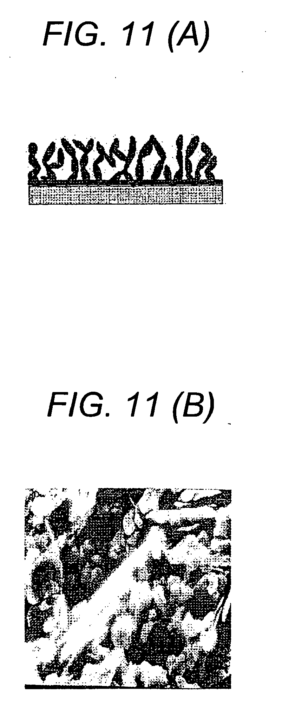

FIG. 11 is a view of the current collecting structure with fiber-shaped graphite formed thereon;

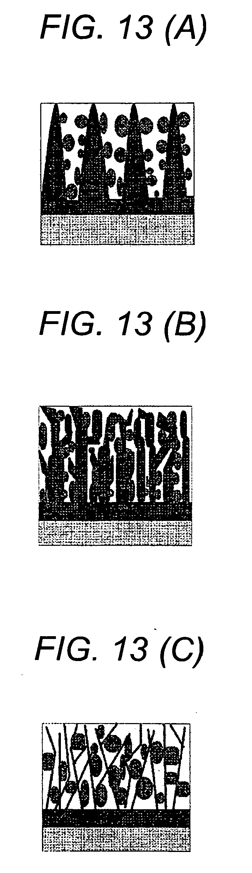

FIG. 13 is a model view of the electrode structure where the electrode active material is formed on the rod-shaped, sponge-shaped, or fiber-shaped graphite surface;

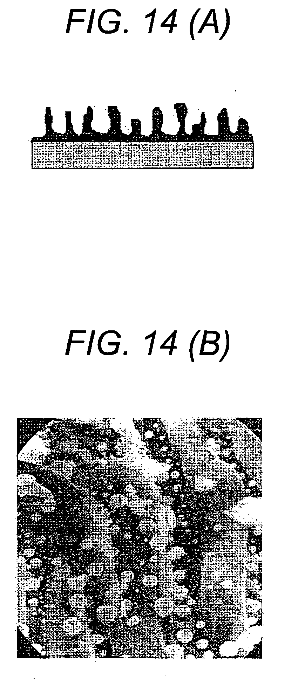

FIG. 14 is a view of the electrode structure where the electrode active material is formed on the rod-shaped graphite surface;

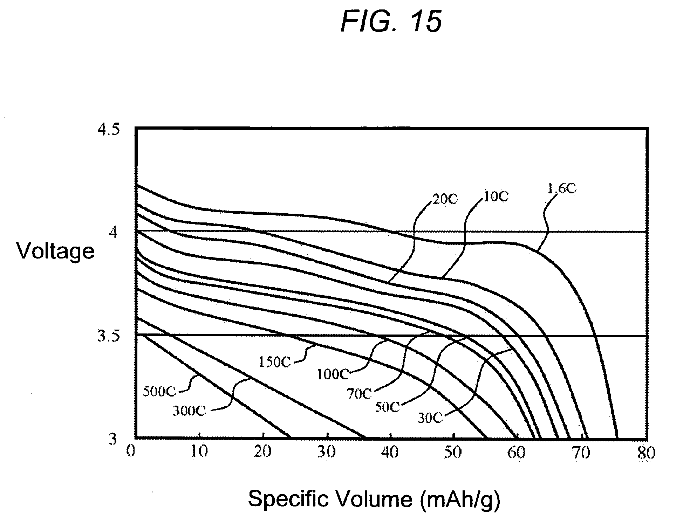

FIG. 15 is a view illustrating the electric discharge rate of the battery pack cell;

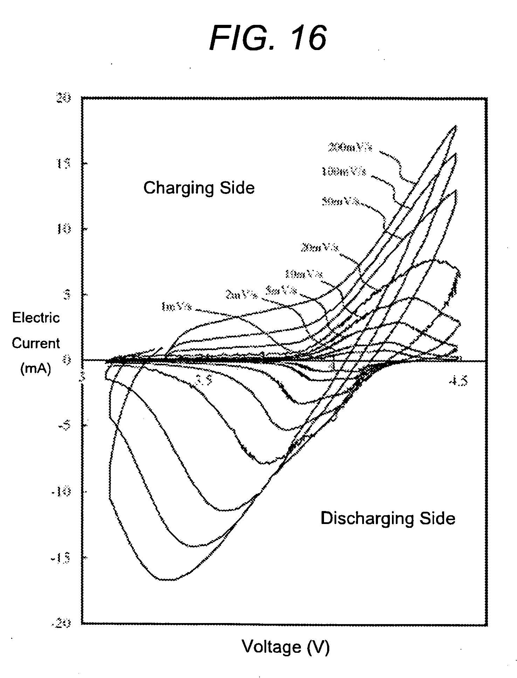

FIG. 16 is a view illustrating the electrode response of a battery beaker cell (vertical axis: i/mA, horizontal axis: E/Vvs1MLi⁺/Li); and

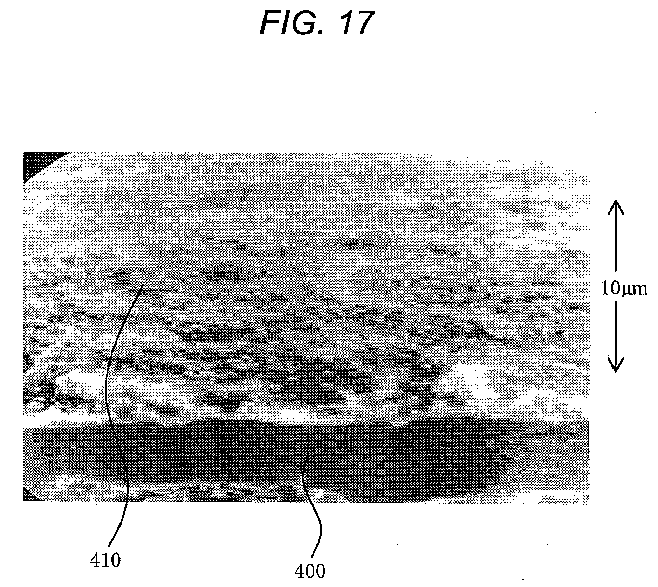

FIG. 17 is a view illustrating the SEM image of the electrode structure.

### DETAILED DESCRIPTION OF THE INVENTION

### <1> Electrodes of Electrical Components, such as Batteries and Capacitors.

Electrodes of electrical components such as batteries, capacitors (electrical double layer capacitor and electrical double layer condenser) are electrically able to communicate with ions and attract the ions. Electrode active materials such as LiMn₂O₄ are used on the current collecting structure in the electrode structure of positive electrodes of batteries. In the case of negative electrodes, the electrode structure such as graphite or hard carbon is used. Furthermore, high surface area electrode active materials, which can adhere to the large number of ions, such as lithium, on the current collecting structure, are used for the electrode structure of the positive and negative capacitors. Electrolytes and separators (when necessary) are arranged in the electrode structure to form secondary batteries and capacitors.

### <2>Current Collecting Substrate

The current collecting substrates are one part of the positive and negative electrodes of the electrical components, such as the batteries and the capacitors, which transfer electricity and support the electrodes. A conducting material such as aluminum and copper that allows electricity to flow therethrough, can be used for the current collecting substrates, and a support material, such as ceramic or glass, attached to the conducting material, such as metal or carbon as well as stainless steel, can be used for the current collecting substrates. For example, aluminum membranes and copper membranes can be used for the current collecting substrate. Furthermore, such things as layers or membranes formed by deposition of carbon such as graphite on the surface of ceramic or glass and things formed by metals such as aluminum or copper can be used. In the invention, the carbon material is a material with carbon as a principle component.

### <3>Current Collecting Structure

The current collecting structure is one part of the positive electrode and negative electrode of the electrical components, which collects electricity to flow inside and outside of the electrical components. The current collecting structure is formed by a current collecting layer made from a carbon material, such as graphite, on the current collecting substrate. The carbon material that does not use adhesives (binders), is formed as a layer or membrane on the current collecting substrate or is formed as a current collecting layer with a porous structure that has internal voids such as rod shapes, sponge shapes, or fiber shapes on the current collecting substrate. The current collecting layer is formed on the current collecting substrate by droplet or spherical shaped carbon material without the use of binders. Formation is the achievement of a bonded, fastened, or associate fixed shape, for example growth formation. The method of forming carbon material is done by a variety of methods. Various formations of layers or membranes of carbon material as rod-shapes, sponge-shapes, or fiber-shapes may be controlled by a variety of conditions. The carbon material is attached, fixed, or formed on the current collecting substrate without the use of binders. Aside from the metal materials, hard carbon, soft carbon, or a mixture of these as the carbon materials, other than graphite, can be used in the negative electrode current collecting structures. Additionally, "current collecting layers made from the carbon material" are current collecting layers that mainly use the carbon material. If they function as the current collecting structures then it is acceptable to include other materials.

The rod-shape, sponge-shape, or fiber-shape shows the condition that the carbon material is formed on the substrate with differing void percentages. That is to say, rod-shape, sponge-shape, or fiber-shape shows the condition that the carbon material has a void percentage like seaweed or algae. The rod-shape is a wide carbon material that protrudes into the upper region, for example the density is 1.4g/cm³ as a layer. The sponge-shape is the carbon material finer than the rod-shape that protrudes into the upper region, for example, the density is 0.75g/cm³. The fiber-shape is even finer than the sponge-shape that protrudes into the upper region, for example the density is 0.4g/cm³. The density of a typical layer or membrane is, for example, 2.4g/cm³. The numerical values of these densities are just one example and can be selected as desired. The rod-shape may also be called cylindrical shape; the sponge-shape may also be called chain shape; and the fiber-shape may also be called filamentous shape.

The rod-shaped, sponge-shaped, or fiber-shaped protruding carbon material has a higher density (lower void percentage) near the current collecting substrate and a lower density (higher void percentage) in the upper region. By changing the void percentage as such according to positions, density of the electrode active material and electrolyte can be changed and the penetration in the current collecting substrate is facilitated, thereby providing effective construction as the electrodes.

### <4> Electrode Structure

The electrode structure is formed by the electrode layer made from at least the electrode active material and the conductive material on the current collecting substrate. The electrode structure is produced by forming electrode active material on the surface of the rod-shaped, sponge-shaped, or fiber-shape carbon material (below, also includes fork-shaped and branch-shaped) and forming the porous electrode layer on the current collecting substrate. Here, the electrode active material, with such as the droplet shape and spherical shape, is formed without the use of the adhesive (binders) on the surface of the current collecting structure. Formation is to achieve the condition of fixation such as by adhering, attaching, and bonding, an example of which is growth formation. It is preferable for the electrode active material formed on the surface of the carbon material to be less than 2µm especially for the mean particle diameter; more preferable if it is less than 1µm; and for example, sub-micron is desirable. Mean particle diameters of 1-2 microns are at the upper limit of the milling processing, and it is desirable if the active material smaller than that limit is formed on the surface of the carbon material. When the mean particle diameter of the electrode active material is small, the surface area volume becomes large, and the transfer of ions in and from the electrode active material goes smoothly, so that the characteristics of the electrode improve. In the case of milling and applying the electrode active material, aside from the problem of milling limits, the binders need to be used to cover the surface of the electrode active material, and the ion transfer in and from the electrode active material is limited, thereby worsening the electrode characteristics.

The electrode structure is such that porous electrode active material in such as the rod-shape, sponge-shape, or fiber-shape (below, also includes forked-shape and branched-shape), which has internal spaces, on the current collecting substrate, and the conductive material is formed therein. Formation is done by a variety of methods and conditions. The electrode active material, such as in the droplet and sphere shapes, may be formed on the current collecting substrate without the use of binders.

The electrode structures are manufactured by forming the conductive material such as graphite on the surface of the electrode active material that is formed on the current collecting substrate. The conductive material is formed in the particulate shape or fiber shape on the electrode active material surface. The conductive material is formed in the particulate shape or fiber shape on the current collecting substrate. The conductive material is formed on the current collecting substrate that is not covered with the electrode active material. Alternatively, it is formed at high density on the surface of the electrode active material close to the current collecting substrate. Alternatively, the conductive material is formed on the current collecting substrates that are not covered by the electrode active material and formed at high density on the surface of the electrode active material close to the current collecting substrate. Electrical resistance can be decreased by these compositions.

Along these lines, use of binders is not necessary, and by being able to increase the void percentage, low electrical resistance electrode structures and high-rate batteries can be achieved. Alternatively, the electrode structure with high ionic conductivity and electrical conductivity can be achieved. Alternatively, in order to not have the influence of secular change of the binders, long-lived isotope electrode structure can be achieved. Alternatively, because ceramic or glass is used as the current collecting substrate, the electrode structure with high durability by long-lived isotopes can be achieved. Alternatively, the electrode structure with low elasticity due to temperature change can be achieved. Alternatively, processing at high temperatures is possible, which facilitates the manufacturing of the electrode structure, thereby allowing the achievement of electrode structures with a variety of structures. Alternatively, because of its excellent resistance to erosion, the selection of electrolytes such as non-flammable and non-poisonous can be broadened. Electrolytes can have a variety of states, such as liquid or solid. Electrolytes enter inside the electrode structure, and the electrode active material, the electrolytes, and the conductive material become highly conductive, both electrically and ionically.

Large capacitance batteries or capacitors can be manufactured because the rod-shaped, sponge-shaped, or fiber-shaped conductive material and electrode active material can be formed on the current collecting substrate as the electrode layer with desirable shapes, width, and voids. As structuring such, the void percentage can be regulated as desired, and for example, the void percentage of more than 40% is possible. Because the conductive material can be formed with hard carbon or soft carbon, the electrical features of the electrode structure can be changed variously.

In the electrode structure, there can be an electrode active material with the surface on which particulate or fiber conductive material, the current collecting substrate that is not covered with electrode active material which the conductive material is formed thereon, the electrode active material with high density conductive material formed near the current collecting substrate, and electrolytes existing in the spaces of the electrode active materials.

Furthermore, the expression of "without the use of binders" in the invention, in formation of the current collecting structure or electrode structure, means the condition of being fixed, such as by adhering, attaching, or bonding the carbon material, electrode active material, and current collecting substrate practically, without the use of the adhesive strength of the adhesive (binder). Alternatively, it means the condition of being fixed, such as by adhering, attaching, or bonding the carbon material itself or the electrode active material itself.

### <5> Electrode Active Material

Electrode Active Material gives and accepts ions, and there are many materials according to the type of battery. For example, in the case of lithium batteries, lithium active material such as LiCoO₂, LiNiO₂, and LiMn₂O₄ can be used as the positive electrode active materials. For the negative electrodes, carbon fiber materials and metals, such as lithium metal, may be used. For the electrode active materials, the high surface area material may be used. In particular, activated carbon, activated by methods such as steam activated carbon material and fused KOH activation, is preferable.

### <6>Electrode Structure of Fuel Cell Batteries

Fuel cell electrodes or air electrodes of such as PAFC and PEFC fuel cell batteries can be formed by sponge-shaped porous substances, for example, porous carbon structures. Catalysts such as white gold in this kind of porous structures are contained within the electrodes of the fuel cell batteries. Porous substances, for example porous carbon, can be formed in sponge shape following the above-mentioned deposition process, durable and stable internal containment power can be maintained, and the durability of fuel cell batteries can be increased. Furthermore, through deposition of the above-mentioned electrode active material, catalysts such as white gold can be formed in a variety of shapes, such as granular or spots upon porous structures

The methods for forming rod, sponge and fiber-shapes on the current collecting substrate are indicated below.

### <1> Method of Formation by Self Organization

Self organization of carbon, for example, using nanotechnology, can achieve, without binders, structure with internal voids by means of interactions that have directionality. Accordingly, it is possible to form carbon (graphite) or electrode active material that has internal voids in rod-shape, sponge-shape, or fiber-shape on the current collecting substrate.

### <2>Method of Formation by Molecular Beam Epitaxy

The molecular beam epitaxy method can make crystal grow as applying the molecular beam on the heated substrate and artificially construct, without adhesives (binders), an intended shape small-size structures of about 20 nanometers. By using this technology, rod-shaped, sponge-shaped, or fiber-shaped carbon (graphite) and the electrode active material with internal voids can be formed on the current collecting substrate.

### <3> Method of Formation by Deposition

With deposition it is possible to change the materials in a variety of forms with different chemical compositions, layer structures, thickness, and in droplet and sphere particulate matter. Furthermore, deposition can provide high deposition rate. In the method for depositing a thin film according to one embodiment, a vapor, including at least one selected vapor phase component, is supplied under a variety of conditions into a substantially evacuated processing chamber. The vapor is condensed onto a heated substrate to form the liquid phase deposit by holding the temperature of the substrate lower than the condensation temperature of the component but higher than the sublimation temperature of the vapor phase component. Based on the above-mentioned conditions, vaporized material deposits on the substrate as the liquid layer with a substantially fixed thickness according to the dampness of the substrate surface, not as a solid layer like in prior heat spattering techniques. This ensures good adhesion to the substrate and uniform thickness of the deposition. After cooling, the liquid deposit solidifies. Various structures of depositions are possible by variously changing the deposition conditions.

As used herein, the term "sublimation temperature" refers to the maximum temperature in which a solid phase deposit can directly result from the corresponding vapor of the component. The liquid component is then cooled to form a solid phase layer of the desired material.

Deposition without chemically altering the source material is possible. And, although a single source material can be used, provision of two or more vapor phase components is possible. Two or more vapor phase components, such as co-evaporation of at least two reagent sources to form a plurality of vapor phase components, are condensed onto a substrate. The condensed reagent components can react in the liquid phase on the substrate surface following condensation.

The deposition according to this invention is applicable to the deposition of a wide variety of layers, including but not limited to thin films of metallic, semiconductor, and nonmetallic inorganic materials. The deposition is useful for forming solid electrolytes and electrodes for use in batteries. In addition, the deposition can be used for fuel cells and other electromagnetically active devices.

The deposition requires that at least one vapor be provided in the processing chamber. Evaporation of the solid source materials can be used to provide a vapor. For more complex desired compositions, such as the formation of eutectic electrolytes having a plurality of components, individual components in a suitable molar ratio in solid form can be melted by placing into a heating device, such as a furnace. The melt is preferably stirred. Stirring may be provided by a cavitation stirring device. The liquid material can be dispensed onto a solid surface and cooled to obtain particles having the desired eutectic composition. The particles can then be ground to a size preferably less than 100 µm to form a powder suitable for evaporation. Regardless of the source of the vapor, the vapor is condensed on a heated substrate to form a liquid phase deposit by holding the temperature of the substrate at a temperature lower than the condensation temperature of the vapor phase component.

It is preferable to hold the process chamber walls at a temperature sufficient to avoid deposition thereon, because deposition of evaporated material on the reactor chamber walls can lower the deposition rate on the substrate and can lead to particulate inclusion in the deposited layer. For example, flaking of the film deposited on the processing chamber walls can result in particulate incorporation in the deposited film. Thus, respective temperatures of the processing chamber and substrate are preferably selected to condense liquid on the substrate, but not on the processing chamber walls. For this purpose, temperature of the chamber walls is maintained at a value above condensation temperature of the vapor while the substrate is maintained at a temperature below the condensation temperature of the vapor.

The resulting structure of the solid film formed depends on the cooling rate of the deposited liquid. Selected cooling rates depend on the particular material and the intended use of the material. As the cooling rate increases, the structure of the deposited layer generally changes from crystalline to microcrystalline (polycrystalline) to amorphous-crystalline to amorphous. The term amorphous-crystalline as used herein refers to a structure having localized small crystallites disposed in a substantially amorphous matrix.

Microcrystalline and amorphous-crystalline structures generally exhibit a high degree of uniformity in chemical composition and also good electrochemical properties, such as ionic conductivity and electrochemical activity. Electrochemical properties of films of cathode materials based on molybdenum oxide and solid electrolytes based on eutectic oxide and sulfide systems have shown high values of cathode specific energy and electrolyte conductivity when the films have microcrystalline and amorphous-crystalline structures, respectively. The invention can be used to deposit thick and multilayer films to provide electrode and electrolytes for batteries including an electrode layer deposited on an electrolyte layer.

### <4> Deposition Apparatus

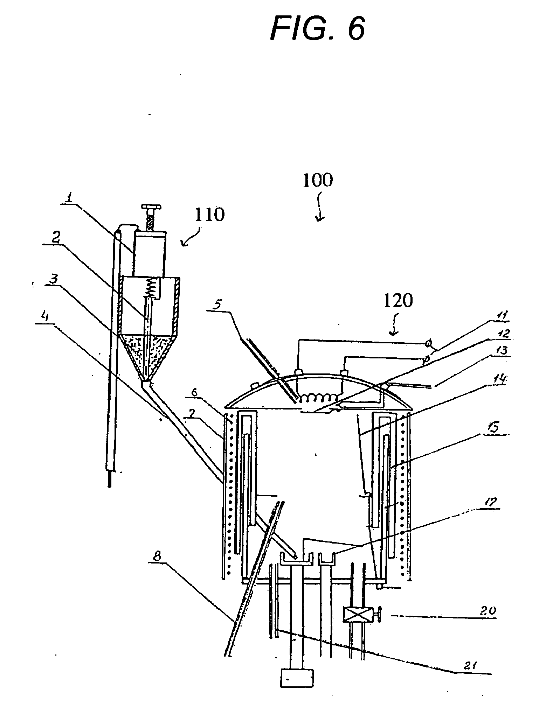

FIG. 6 shows a general-deposition system 100 adapted for the deposition of the material using vapor condensation. The deposition system 100 can include a dosing device 110, a processing chamber 120, having an adjustable working chamber volume, and a valve 20, permitting isolation of the substrate from other parts of the working chamber. A decrease in the volume of the working chamber during the evaporation/condensation process can increase the vapor density and the rate of condensation of vapor on the substrate. After the evaporation/condensation process is completed, a subsequent volume increase of the working chamber with the valve closed can be used to lower the temperature of the deposited layer resulting from adiabatic expansion, which can increase the rate of solidification of the film. If evaporation is used to provide the vapor, cavitation stirring of the melt in the evaporation device can be used in combination with a system for correcting the composition of the vapor. For example, when evaporating heavy and light elements together it is preferable to correct the vapor composition because of the different agility and partial pressure of the respective elements comprising the vapor. One or more additional evaporating or inlet gas systems can be used simultaneously with the main evaporator to supply additional vapor of one or more components to raise the partial pressure of this component to correct the composition of the vapor.

In some cases the electrical resistance of the vapor depends on its composition. In this instance, it is possible to control the vapor composition "in situ" by measuring the electric current between two specific electrodes under high (e.g. 500 V) voltage and correcting as described above.

This method allows production of thin films of different materials on various substrates, such as metallic and ceramic substrates, and substantially avoids segregation in the heater bath and provides formation of a high homogeneity vapor composition.

When the vacuum condensation method includes processing by evaporation of at least one solid source material, the resulting thickness, structural homogeneity, and resulting physical and chemical properties of the deposited film have been found to principally depend on parameters. The parameters are: 1. Temperature of the evaporation device, 2. Temperature of the vapor of the evaporated material, 3. Pressure and density of the evaporated material vapor, 4. Temperature and state of the substrate surface, 5. Rate of deposition of the condensed film, 6. Rate of cooling of the condensed film.

Other factors which can influence the process include the geometry and the processing chamber material, as well as the specific power density of the evaporation device. The influence of each of these parameters are considered separately, using an apparatus for the production of thin films using vapor condensation, such as the apparatus shown in FIG. 6.

Referring again to FIG. 6, the desired film components are typically introduced as a powder 3 inside a dosing device, which are introduced into the processing chamber through chute 4 using a dosing needle. The dosing needle 2 can be controlled by an electromagnetic lever 1.

The processing chamber is heated by a heating device 6, such as resistive heating elements, that can be protected by a shield 7. An inert gas, such as argon, may be introduced through a pipe 5 which can be directed to the side of the substrate 12. A second inlet for an inert gas through a pipe 8 can be provided for flowing an optional gas over the deposited film. Preheated gas may also be introduced into the chamber through a pipe 21.

The substrate can be heated by a heater 11. The temperature of the substrate can be monitored by a thermocouple 13. A vacuum valve 20 is provided to allow evacuation of the reactor chamber. An external compartment 15 of the processing chamber is preferably expandable and contractible to permit the volume of the processing chamber to be modified. An evaporating device 17 can melt and evaporate one or more components to be deposited.

The temperature profile of the evaporation device can be adjusted to ensure a preliminary drying and outgassing of the source material. With rising vapor density, the evaporation rate can decrease. This decrease can be compensated by a corresponding temperature increase of the evaporation device. However, too sharp an increase of this temperature at the beginning of the process may lead to formation of macroscopic droplets. Macroscopic droplets generally show poor adhesion to substrates upon condensation on the substrate. However, macroscopic droplets can be useful when applied at the final step of the process since these droplets are generally of an aerosol size and condensation on the already formed film can increase the specific area of the film. Increased specific film area can be useful in battery applications because it generally enhances the electrochemical properties of the cathode or solid electrolyte material.

### <5> Deposition Processing

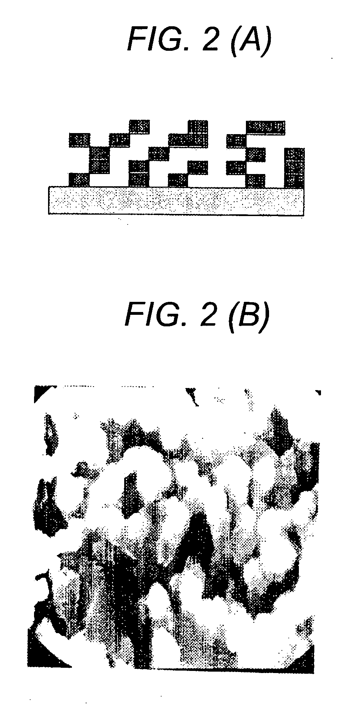

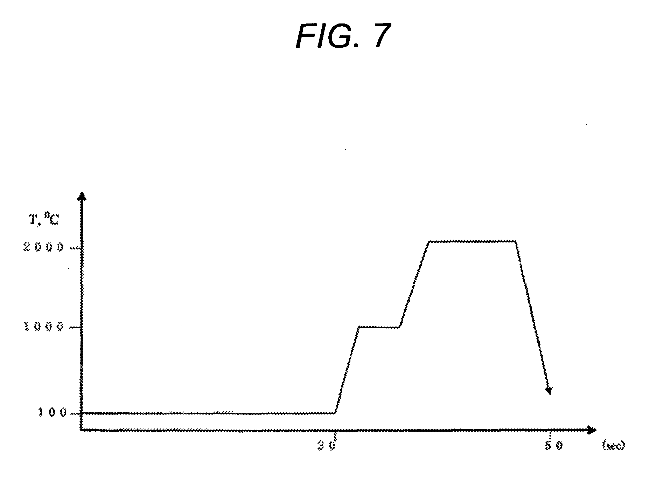

A typical temperature profile for an evaporation device suitable for evaporation of most eutectic oxides, sulfide systems, and boride systems with a melting temperature in the range of approximately 900 °C to 1000 °C is shown in FIG. 2. The temperature profile shown in FIG. 7 includes 3 stages. The third stage, being at a temperature of up to 2000 °C, is where evaporation occurs. A first low temperature stage at 100 - 150 °C is a drying stage. An intermediate temperature stage at 900 - 1100 °C is an outgassing stage. The third stage, being at a temperature of up to 2000 °C, is where evaporation occurs.

The temperature of the vapor determines the kinetic energy of the vapor atoms or molecules. The equation E = 3/2kT relating energy of a gas and temperature should generally not be used to estimate the kinetic energy of the vapor atoms or molecules described herein as that equation generally applies well to an ideal gas, but not for a vapor. An increase in vapor temperature generally improves the adhesion of the resulting layer to the substrate. However, assuming the reactor volume is held constant, increasing the temperature of the vapor during the evaporation stage influences its pressure and density. Generally, at a temperature approaching the critical temperature of the vapor in the vicinity of substrate maximizes the deposition rate and provides a highly homogeneous layer.

Vapor temperatures near the evaporator and substrate are generally significantly different. This is due to the high rate of evaporation of an initial substance and a low thermal conductivity of the vapor. Because of the high rate of substance evaporation, pressure and vapor density are also variable, but generally to a lesser extent than temperature. Thus, in the described system the vapor pressure, temperature and vapor density are different in all parts of the system. Therefore, phase diagrams are not presented.

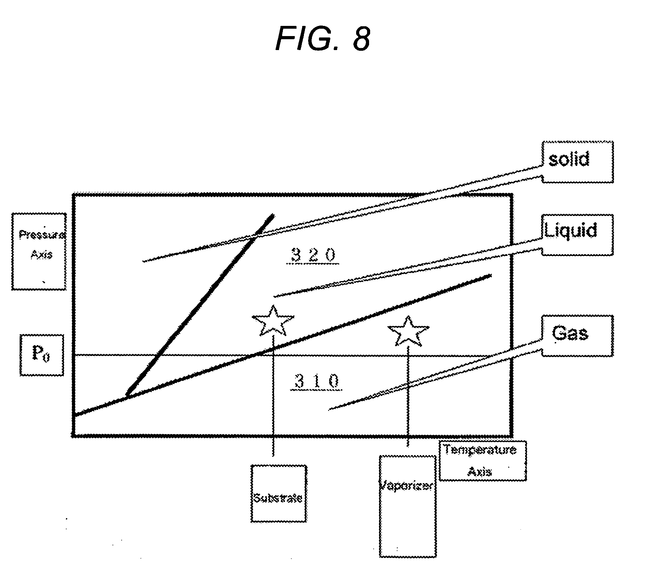

However, approximate consideration of the proposed invention can be presented where the pressure and vapor density can be considered as constants within a volume of the system. In this case, vapor condensation without its solid phase deposition can be explained on the basis of the schematic phase diagram shown in FIG. 8. As shown in FIG. 8, at a constant pressure P, the substance that is near evaporator has higher temperature and is in a vapor state 310. On the other hand, near the substrate, where the substance is deposited, the temperature is lower. The phase corresponding to the substrate temperature at pressure P is located in the region of a stable liquid phase 320. Thus, the deposition provides vapor condensation on the substrate.

In the deposition, vapor density and associated thermodynamic parameters are determined by the evaporation rate of the starting substance and the rate of condensation on the substrate. In addition, initiation of vapor condensation on a substrate occurs at a pressure which is generally higher as compared with its equilibrium value (located on a diagram line). This likely results because in passing to the condensed state the vapor has to reach the necessary degree of supersaturation. Independent temperature control systems are preferably provided for control of the evaporator and substrate temperature. The temperature control systems are preferably computer regulated. Independent temperature control systems for the evaporator and the substrate enable the maintenance of a desired temperature distribution in a working chamber substantially independent of the rate of spraying.

Wetting properties of several materials on a variety of substrates, such as stainless steel (Cr₁₈Ni₁₀Ti) were investigated. It was found that most eutectic cathode oxide electrode materials are deposited on stainless steel (Cr₁₈Ni₁₀Ti) as a liquid layer rather than discrete droplets, thickness of which depends on the viscosity and the surface tension of the liquid at the selected substrate temperature.

Following liquid deposition, forced cooling may be used to more quickly solidify the liquid. For example, a jet of an inert gas may be used to cool the liquid to be deposited. The structure of the solid that is formed generally depends on the cooling rate. As the cooling rate increases, the degree of crystallinity generally decreases.

For electrode and solid electrolyte materials used in batteries, such as oxides of Mo, W, Li, B, and their eutectic compositions, at cooling rates of up to 2 K/s a crystalline structure is generally formed. An increase in the cooling rate to approximately 5 K/s to 7 K/s generally leads to the formation of an eutectic fine-grained structure. A further increase of the cooling rate in eutectic systems of solid electrolytes leads to the formation of an amorphous-crystalline structure and a microcrystalline, or mostly amorphous structure in the case of electrode materials. An amorphous-crystalline structure consists of highly dispersed crystalline phases with a broad homogeneous amorphous domain and allows different kinds of solid solutions therein.

The deposition can be used to form a thin film structure that differs from the structure of the initial source material. For example, for the deposition of solid electrolytes for batteries, the initial materials are generally eutectic compositions having a melting temperature in the range 800 - 1000 °C. Using the deposition, a condensed thin liquid layer is initially formed, which subsequently solidifies under controlled cooling. The controlled cooling can be provided by forced gas, such as an argon jet. The substrate temperature and the cooling rate are chosen in such a manner that an amorphous-crystalline structure is formed having an enhanced ionic conductivity at room temperature.

Such a structure can provide for a 500 - 1000 fold increase of the ionic conductivity of the electrolyte, which is believed to result from the formation of vacancies on the interfaces between the inserted crystalline phases in an amorphous matrix. An inserted phase that increases the conductivity of solid electrolytes has been reported in several investigations regarding mechanical mixtures of aluminum and silicon oxides and halogenides of lithium, silver and copper. For example, Wagner Jr., J.B. in: C.A.C. Sequeira and A. Hooper, Sequeira and A. Hooper, Solid State Batteries, Matinus Nijhoff Publ. Dordrecht, 1985, p. 77. The invention can enhance this effect because of the minimization of micropores and other macrodefects. In addition, additional ion transfer along vacancies between the most closely packed faces of the crystal lattice can further enhance this effect.

Additional ion transfer is achieved primarily as a result of vacancies created in the solid electrolyte. It is known that rising temperature increases the equilibrium concentration of vacancies. During forced cooling of thin layers by a jet of a cooling gas, some of the vacancies are not annihilated and remain in the final film. This generally has a positive effect on the ionic conductivity of the electrolyte layer.

The cooling process can be adjusted based on the desired layer properties. In the case of forced gaseous cooling (e.g. Ar) to achieve thick layers, a gas can be directed toward the side of the substrate. This can prevent thermal cracking of the layer. When a desired deposition layer requires a high cooling rate for formation of an amorphous-crystalline structure, the cooling jet can be directed to the side of the deposition layer. When high thermal stresses are known to develop, the jet can be directed from both sides of the deposition layer.

To reduce the time required for deposition, the deposition rate may be increased by decreasing the volume of the process chamber. The decreased process chamber volume increases the density of the vapor, which can increase the deposition rate.

A multilayer deposition of the same or different materials may be achieved by using a cyclic multi-step process. For example, an evaporation device can be filled with the desired source material, the source material evaporated and the resulting vapor condensed on a substrate. The substrate can then be cooled at a rate 0.1 to 100 K/s to solidify the layer. The processing chamber can then be evacuated. The evaporating device can then be refilled with the same or a different source material, and the steps repeated. Alternatively, if multiple evaporating devices are provided, the refilling step would not be required.

Using a cyclic procedure, relatively thick layers (e.g. > 20µm) can be produced which retain their microcrystalline or amorphous-crystalline structure compared to the one step evaporation, when a substantially crystalline structure often results from non-optimum cooling. Relatively thick layers can be produced which retain their microcrystalline or amorphous-crystalline using the cyclic procedure, where only a thin layer is rapidly cooled during each cycle.

There are generally substantial difficulties in effectively cooling relatively thick layers (e.g. > 20µm), obtained by a one step evaporation method. Cooling continues after the deposition of substantially entire layer thickness. Because of the low thermal conductivity of many materials, including most electrolyte and electrode materials, the cooling rate necessary for amorphous-crystalline structure formation is obtained only for a thin outer surface of the layer. Inside the layer heat removal is less efficient and as a result a crystalline (e.g. polycrystalline) structure generally forms throughout the material. During the multilayer cyclic deposition process, a plurality of cooling and deposition steps are used, cooling occurring after each thin layer deposition. As a result, cooling herein is much more efficient as compared to conventional cooling processes.

The vapor condensation followed by the cooling produces composite layer stacks (e.g. cathode/solid electrolyte) with sufficient adhesion between the respective layers. Sufficient intra-layer adhesion as well as inter-layer adhesion also results when interval deposition is used for one or more layers.

If a large amount of material is to be deposited using evaporation from a melt, it is recommended to cavitationally stir the melt, such as by using an ultrasound magnetostriction device to couple ultrasound radiation to facilitate evaporation of the material. A frequency of 22 KHz was used for the performed experiment.

Melt stirring can be helpful because the evaporation process takes place mostly from the surface of the melt. In the case of a large amount of the material is to be evaporated, convection in the liquid does not have sufficient time to compensate for the lack of the component with the highest evaporating rate being on the surface of the melt.

For the deposition of complex multi-component electrode and electrolytes, if the components have low reciprocal solubility in the solid state, separate evaporation devices for each component with different evaporation temperatures are preferably used. For cyclic depositions, an adiabatic compression or expansion of the processing chamber may be used during the deposition and cooling steps, respectively, in order to accelerate the procedure and to enhance heat transfer from the deposited layer.

Adhesion of deposited layers generally depends on the state of the specific substrate surface. The adhesion may be enhanced by preliminarily cleaning the substrate surface prior to the deposition. For example, ion beam and plasma treatment cleaning solutions that are known in the art may be used.

Pulse deposition may be used, in some cases, to produce the layer with improved surface smoothness. The pulse deposition deposits a portion of the desired layer thickness, suspends the deposition process for one cycle, and then deposits another layer. The pulsed deposition can be realized using a shutter that can isolate the evaporated vapor from the process chamber. For example, the shutter can be opened for a short period of time when the vapor reaches a predetermined temperature and the walls of the process chamber and the substrate reach the desired temperature. If the shutter is reasonably hermetic, the pressure increases near the heater. As a result, the flow of the depositing material becomes oriented towards the substrate.

In some applications of this deposition, it may be preferable to add components into the layer that is not present or present only in small quantities in the initial source material. In this case, one or more gases may be introduced into the process chamber during the deposition which contains the desired additional components before cooling the substrate. The gas is preferably preheated to the desired temperature, such as the temperature of the reactor chamber.

A thin additional metallic layer such as Cu, Au, Pt, Al, Al-Li alloy or Li layer having a thickness of up to approximately 5µm may be deposited on the surface of the deposited layer. This layer can be used for determining properties of the layer formed from the vapor condensation process. For this purpose, the specific electrical resistance (expressed in units of ohm-cm) between the substrate and the additional metallic layer can be measured through the film formed from the vapor condensation process. If the measured resistance value is lower than the value calculated from the specific conductivity and the geometric dimensions of the film, the presence of a layer having high porosity and/or the presence of a high concentration of defects may be indicated (see FIG. 8) Lower specific electrical resistance using this deposition is believed to result because of sufficient adhesion to the solid electrolytes and cathode materials and because the deposited metals penetrate in porous micro cracks and other defects of the layer. This reduces local short circuits and generally decreases the specific electrical resistance of the layer.

Examples of the current collecting structure, electrode structure, and a battery are explained below.

### <1> Example of Current Collecting Structure

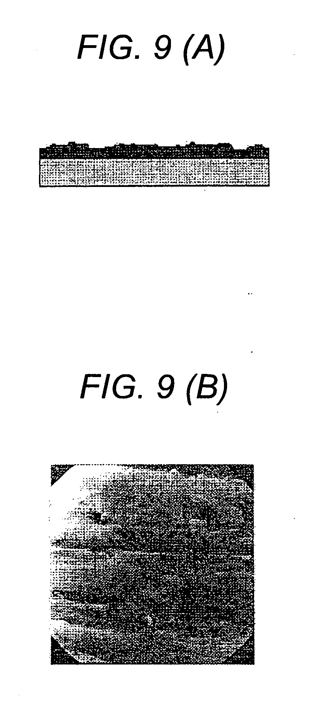

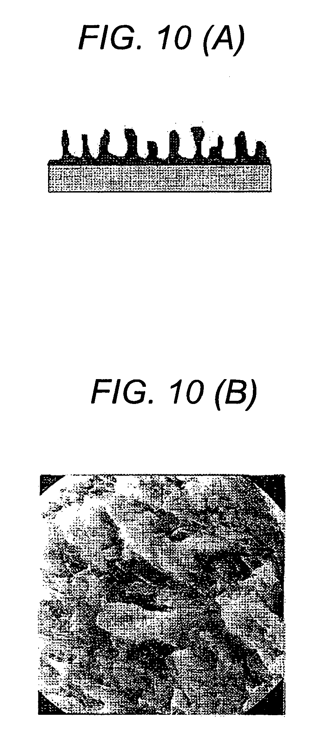

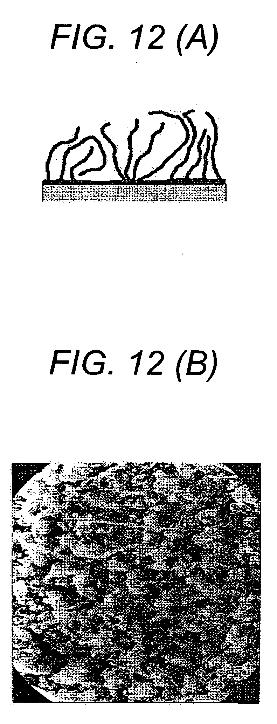

FIG. 9 shows an example of the current collecting structure formed by deposition of the graphite collecting layer on the aluminum current collecting substrate. Deposition conditions are variously changed. FIG. 10, FIG. 11, and FIG. 12 respectively are examples of rod-shaped, sponge-shaped, and fiber-shaped current collecting structures formed by deposition of the graphite collecting layer on the current collecting substrate. FIG. 10(B)-FIG. 12(B) are all image enlarged 2000 times (SEM image). In this way, the current collecting structure with high void percentage graphite and conducting aid functionality can be achieved.

### <2> Example of Electrode Structure

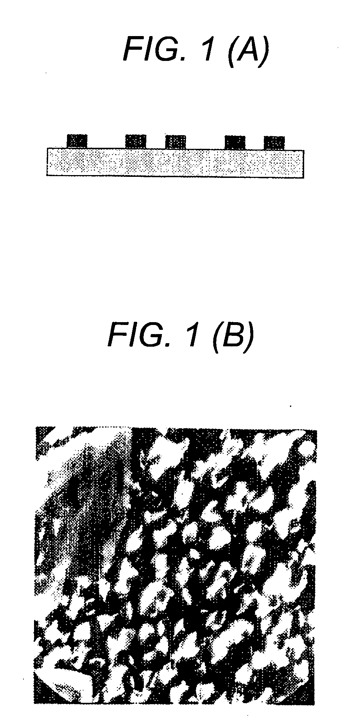

Examples of the structure of electrode active material formed by the electrode active material on the current collecting substrate are shown in FIG.1-FIG.2. FIG. 1 is an example of spotted electrode active material formed by deposition on the current collecting substrate. FIG. 2 is an example of the rod-shaped, sponge-shaped, or fiber-shaped electrode active material formation. Deposition conditions are variously changed. FIG. 1(B)-FIG. 2(B) are images enlarged 18,000 times (SEM image) of Spinel LiMn₂O₄ electrode active material (white places) formed on the substrate. In FIG. 2 the structure of an electrode active material with a high void percentage electrode active material can be achieved.

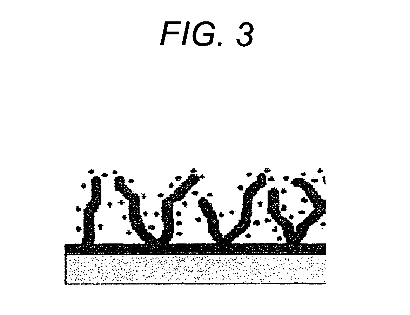

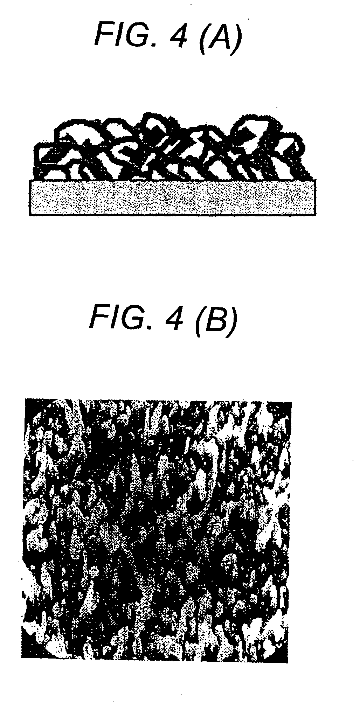

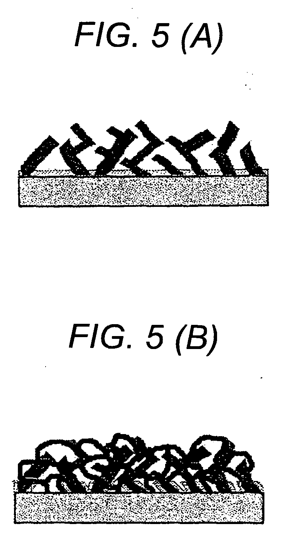

FIG. 3 shows a schematic diagram of the electrode structure with the electrode layer in which a graphite layer level to a stainless substrate is constructed as the current collecting substrate, the rod-shaped, sponge-shaped, or fiber-shaped electrode active material is formed, and the particulate conductive material is formed thereon, while FIG. 4 4 shows the electrode structure formed by fiber-shaped graphite. FIG. 4(B) is an example of the electrode structure by forming fiber-shaped graphite on the current collecting substrate surface and the Spinel LiMn₂O₄ electrode active material surface. FIG. 4(B) is an image magnified 4000 times (SEM image). In this way a high void percentage electrode structure can be achieved without the use of binders. With this, liquid and solid electrolytes enter into the electrode structure, and electrode active material, electrolytes, and conductive material become highly conductive both electrically and ionically. FIG. 5(A) show an illustration of the conductive material on the current collecting substrate that is not covered with the electrode active material (slanted line part of the layer on the substrate surface). FIG. 5(B) shows an illustration of the high-density conductive material on the surface of the electrode active material close to the current collecting substrate (the slanted line part of the electrode active material on the substrate surface).

FIGS. 13(A)-(C) show schematic diagrams of the electrode structures formed by deposition of a granular electrode active material on, respectively, rod-shaped, sponge-shaped, or fiber-shaped graphite surfaces of current collecting structures. FIG. 14(A) and FIG. 14(B) are examples of the electrode structure that can be formed by deposition of particles of Spinel structure lithium manganese oxide on the rod-shaped graphite. FIG. 14(B) is an image magnified 2000 times (SEM image) showing the granular materials that are Spinial structure particles. In this way, the electrode structures with a high-void-percentage layer can be achieved by deposition without the use of adhesives (binders). With this, electrolytes sufficiently enter into the electrode structure, and electrode active material, electrolytes, and graphite become highly conductive, both electrically and ionically.

By using the above-fundamental current collecting structure or electrode structure, electric conductivity and ionic conductivity are improved; durability is also improved; and strength of adhesion of carbon material to the current collecting substrate is also improved; and this offers batteries and capacitors with good performance.

### <3> Lithium Ion Battery 1

The positive electrode structure of lithium ion battery 1 is formed in a fiber shape, as shown in FIG. 13, by using deposition technology of Spinial type LiMn₂O₄ and carbon material on an aluminum alloy current collecting substrate. This positive electrode structure has an electrode layer made from LiMn₂O₄ with a diameter of 16mm and a thickness of about 10µm. FIG. 17 shows a cross-section of the positive electrode structure. The black strip on the bottom labeled 400 is the aluminum current collecting substrate. A porous collecting layer made from carbon material is formed on the current collecting substrate, and, the porous electrode layer 410, with Spinial type LiMn₂O₄ of granular electrode active material adhered thereto is formed on the surface of the carbon material. FIG. 17 shows the carbon material, electrode active material, and voids on the current collecting substrate. The negative electrode structure uses a lithium alloy. The electrolytes use LiPF₆. This positive electrode structure, negative electrode structure, and electrolyte are put into a commercially available experimental battery pack to construct a battery. FIG. 15 shows the measurement data for that battery. From FIG.15, it is understood that a high electric discharge rate can be achieved above 100°C. Compared to the conventional lithium ion batteries, it is possible to have about 20 times higher electric current.

### <4> Lithium Ion Battery 2

The positive electrode structure of the lithium ion battery 2 is the same as the lithium ion battery above. The positive electrode structure, together with the negative electrode structure, and the electrolyte, are placed in a beaker to form a battery. Lithium alloy is used for the negative electrode structure. The electrolyte used is a 19Ω resistance solution of LiPF₆. FIG. 16 shows that data. This data on electrode response was measured by the experimental method called cyclic voltammetry (CV). When applying voltage of 1mV/s - 20mV/s, at the time of charging, a smooth peak is expressed, which shows that charging and discharging is possible in this range of voltages. For example, at 20mV/s, if charging is completed in the approximately 0.5V interval of 3.9V - 4.4V, then charging takes about 25 seconds. This corresponds to a rate over 100°C. In contrast, when it exceeds 50mV/s, the characteristic double peak of manganese Spinial disappears by voltage loss in the electrolyte resistance solution, but when the voltage is 200mV/s, even if the sweep rate is high, because the gradient of the charging current is the same as a 50mV/s or 100mV/s gradient, active material itself responds sufficiently quickly so that a structure is deemed to have been formed.

It is readily apparent that the above-described embodiments have the advantage of wide commercial utility. It should be understood that the specific form of the invention hereinabove described is intended to be representative only, as certain modifications within the scope of these teachings will be apparent to those skilled in the art. Accordingly, reference should be made to the following claims in determining the full scope of the invention.

## Claims

1. A current collecting structure comprising:
a current collecting substrate and
a carbon material formed on said current collecting substrate without the use of binders.

2. A current collecting structure comprising:
a current collecting substrate and
a rod-shaped, sponge-shaped, or fiber-shaped carbon material formed on said current collecting substrate.

3. A current collecting structure comprising:
a current collecting substrate,
a laminar carbon material formed on said current collecting substrate, and
a rod-shaped, sponge-shaped, or fiber-shaped carbon material formed on said laminar carbon material.

4. An electrode structure comprising the current collecting substrate of claim 1, and
an electrode active material formed on said surface of carbon material.

5. An electrode structure according to Claim 4, wherein
said electrode active material has a mean particle diameter of less than 2 microns.

6. A battery comprising the electrode structure of claim 4.

7. A capacitor comprising the electrode structure of claim 4.

8. An electrode structure comprising:
a current collecting substrate and
an electrode active material formed on said current collecting substrate without the use of binders.

9. An electrode structure comprising:
a current collecting substrate and
a rod-shaped, sponge-shaped, or fiber-shaped electrode active material formed on said current collecting substrate.

10. An electrode structure according to claim 8, wherein
said conductive material is formed on the surface of electrode active material.
